# EUROPEAN PATENT SPECIFICATION

(11) **EP 2 165 394 B1**
(45) Date of publication and mention of the grant of the patent: **29.09.2010**
(21) Application number: 08775901.5
(22) Date of filing: 09.07.2008
(51) Int. Cl.: H01S 3/102, H01S 3/094, H01S 3/23

(54) **APPARATUS AND METHOD FOR LASER PROCESSING A MATERIAL**
VORRICHTUNG UND VERFAHREN ZUR MATERIALVERARBEITUNG MITTELS LASER
APPAREIL ET PROCEDE POUR UN TRAITEMENT AU LASER D'UN MATERIAU

(30) Priority: 09.07.2007 GB 0713265
(43) Date of publication of application: 24.03.2010
(73) Proprietor: SPI Lasers UK Limited, 3 Wellington Park Tollbar Way Hedge End Southampton SO30 2QU (GB)
(72) Inventor: APPLEYARD, Andrew, Paul, Southampton Hampshire SO16 3JB (GB); WALKER, Duncan, John, William, Walton-on-Thames Surrey KT12 4DA (GB); NEAL, Roland, Surrey Quays London SE8 5JD (GB)
(74) Representative: Jones, Graham Henry
(86) International application number: PCT/GB2008/002357
(87) International publication number: WO 2009/007721

(56) References cited:
- EP-A- 1 734 622
- JP-A- 11 261 487
- US-B1- 6 275 250
- S. NORMAN ET AL: FIBER LASERS III TECHNOLOGY , SYSTEMS AND APPLICATIONS, PROCEEDINGS OF THE SPIE, vol. 6102, 23 January 2006 (2006-01-23), pages 61012P-1-61012P-7, XP002531182
- P. DUPRIEZ ET AL: "High average power, high repetition rate, picosecond pulsed fiber master oscillator power amplifier source seeded by a gain-switched laser diode at 1060 nm" IEEE Photonics Technology Letters IEEE USA, vol. 18, no. 9, 9 May 2006 (2006-05-09), pages 1013-1015, XP002531183 ISSN: 1041-1135

## Description

### Field of Invention

This invention relates to an apparatus and method for laser processing a material.

### Background to the Invention

There are many applications for pulsed lasers that require a very wide dynamic range together with consistent pulse shapes and pulse timing. A good example is in processing rolls for printing machines. These require lasers with high average powers which are used to mark the print rolls. The power in the pulses needs to be varied accurately in order to achieve the required print resolution. The greater the dynamic range, the wider the range of print wheels that can serviced by one particular laser. Failure to provide consistent timing and predictable pulse shapes degrades the print quality.

Prior art solutions include use of continuous wave lasers (such as carbon dioxide lasers or fibre lasers) with an external modulator for attenuating the output power. The modulator is typically an acousto-optic modulator which gates and attenuates the laser beam accordingly.

A prior art pulsed laser processing system is disclosed in US 6 275 250 B1.

Unfortunately, as the pulse power is varied in prior art pulsed lasers, the pulse shape smears, and the pulse is also delayed. Alternatively, long pulsed fibre lasers have been used. But the long pulse places restrictions on dynamic range, thereby placing limits on the print resolution (specified in terms of lines per inch) and the quantity of ink transferred per unit area of printed material. The effect is a degradation to print quality and the need to have multiple lasers for marking at different resolutions. Prior art lasers used for this application typically have output powers of between 100W and 500W, with dynamic ranges less than 20dB. It would be advantageous to increase this dynamic range to at least 30dB.

An aim of the present invention is to provide an apparatus and method for laser processing a material which reduces the above aforementioned problem.

### The Invention:

According to a non-limiting embodiment of the invention, there is provided apparatus for laser processing a material, which apparatus comprises a seed laser pumped by a seed pump, an amplifier pumped by an amplifier pump, a controller, and a scanner, wherein the controller controls the seed pump, the amplifier pump and the scanner in synchronism such that optical pulses emitted by the seed laser are propagated through the amplifier and directed to the material by the scanner, the apparatus being **characterized in that** controller controls the amplifier pump to cause the amplifier to act as an optical attenuator when the optical radiation is in a first power range, and as an optical amplifier when the output power is in a second power range.

Advantageously, the invention enables an improved dynamic range. This is an important benefit in manufacturing environments and applications in "micro" materials processing where the laser would be used at the top end of its rated operating range (average power, peak power, pulse energy) in order to machine "coarse" featured items with acceptable productivity, whilst also being equally capable of processing "fine" featured items at the lower end of the rated range where very low average power / low peak power / very low pulse energy are processing requirements. The present invention is able to provide a dynamic range of at least three orders of magnitude (30dB) compared with typically less than two orders of magnitude (20dB) for lasers and master oscillator power amplifiers not configured and operated in accordance with the present invention.

For marking printing rolls, the scanner is preferably a mechanical unit that scans the print roll with respect to the laser beam. Alternatively, or additionally, the scanner may comprise a galvanometer and a reflector. By printing roll, it is meant a roll for printing applications, such as a ceramic printing roll, an anilox printing roll, an ink-transfer roll, an engraved printing rolls, or an engraved sheet that is attached to a roll.

The controller can be a computer controller. The controller may include a switch (such as a relay or a transistor) for turning off the electrical drive power to the amplifier pump when in the first power range.

The seed laser may comprise a cladding-pumped fibre laser. The cladding-pumped fibre laser may comprise a rare-earth dopant. The rare-earth dopant may be ytterbium. Alternatively or additionally, the seed laser may comprise erbium, thulium, holmium or neodymium.

The amplifier may comprise a cladding-pumped fibre amplifier. The cladding-pumped fibre amplifier may comprise a rare-earth dopant. The rare-earth dopant may be Ytterbium. Alternatively or additionally, the seed laser may comprise erbium, thulium, holmium or neodymium.

The apparatus may include at least one additional amplifier stage. Alternatively or additionally, the apparatus may include an absorber or a saturable absorber. The saturable absorber may introduce a delay. The apparatus may include a variable delay for compensating the delay.

The invention also provides a method for marking a material, the method comprising providing an apparatus according to the present invention, and applying the laser radiation to the material. The material can be a printing roll.

### Brief Description of the Drawings

Embodiments of the invention will now be described solely by way of example and with reference to the accompanying drawings in which:
Figure 1 shows apparatus for laser processing a material according to the present invention;
Figure 2 shows pulse shapes according to apparatus not of the present invention; and
Figure 3 shows examples of a pulse obtained according to the present invention;
Figure 4 shows examples of missing pulses;
Figure 5 shows examples of noisy pulses; and
Figure 6 shows examples of the increase in dynamic range afforded by the invention.

### Preferred Embodiment

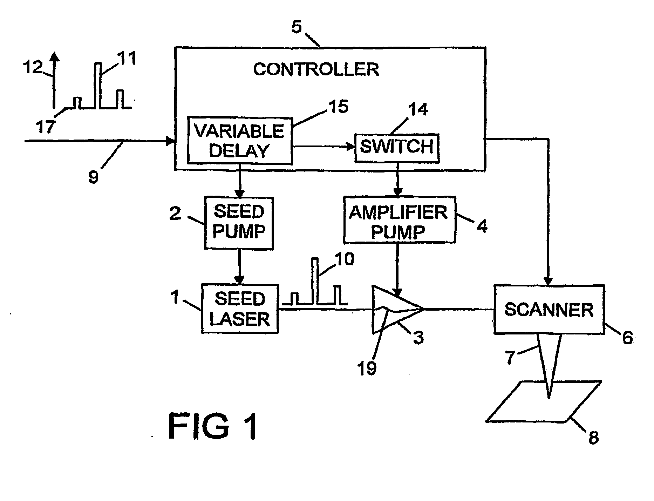

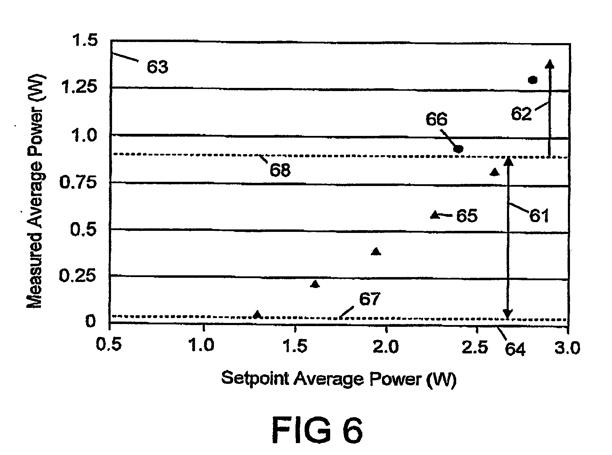

Figure 1 shows apparatus for laser processing a material 8 with optical radiation 7, which apparatus comprises a seed laser 1 pumped by a seed pump 2, an amplifier 3 pumped by an amplifier pump 4, a controller 5, and a scanner 6, wherein the controller 5 controls the seed pump 2, the amplifier pump 4 and the scanner 6 in synchronism such that optical pulses 10 emitted by the seed laser 1 are propagated through the amplifier 3 and directed to the material 8 by the scanner 6, the apparatus being **characterized in that** controller 5 controls the amplifier pump 4 to cause the amplifier 3 to act as an optical attenuator when the optical radiation 7 is in a first power range 61, and as an optical amplifier when the output power is in a second power range 62. The first and second power ranges 61, 62 are described with reference to Figure 6, and can be overlapping. The power amplifier 2 preferably comprises double clad optical fibre 19 that is doped with rare-earth dopant (not shown).

The ability to achieve an improved dynamic range is an important benefit in manufacturing environments and applications in "micro" materials processing where the laser would be used at the top end of its rated operating range (average power, peak power, pulse energy) in order to machine "coarse" featured items with acceptable productivity, whilst also being equally capable of processing "fine" featured items at the lower end of the rated range where very low average power / low peak power / very low pulse energy are processing requirements. The apparatus shown in Figure 1 provides a dynamic range of three orders of magnitude or greater, compared with typically less than two orders of magnitude for lasers and master oscillator power amplifier not configured and operated in accordance with the present invention.

The material 8 can be a printing roll, for example, one used in the Anilox process. For marking printing rolls, the scanner 6 is preferably a mechanical unit that scans the print roll with respect to the laser beam. Alternatively, or additionally, the scanner 6 may comprise a galvanometer and a reflector.

The controller 5 can be a computer controller. The controller 5 can include a switch 14, such as a relay or a transistor, for turning off the electrical drive power to the amplifier pump 4 when in the first power range 61.

The controller 5 can include a variable delay 15 for delaying a control signal 17 comprising pulses 11. Preferably the delayed control signal would be passed to both the seed laser I and the amplifier 3 in order to avoid the amplifier 3 from self-Q-switching. The pulses 11 can have different amplitudes 12.

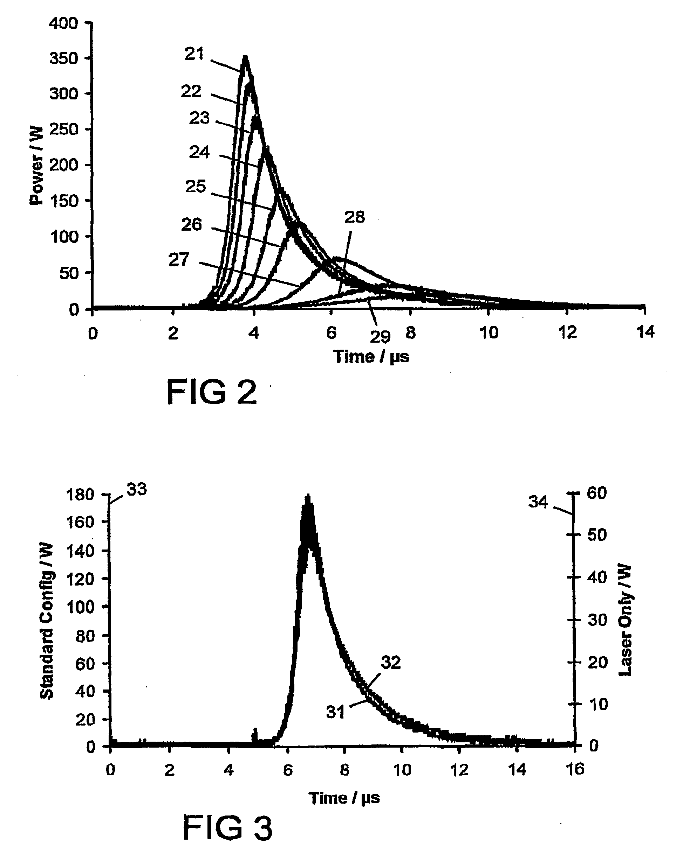

Figure 2 shows pulses 21, 22, 23, 24, 25, 26, 27, 28, 29 produced by modulation of the laser output with various set points corresponding to continuous-wave equivalent output powers of 200W, 180W, 160W, 140W, 120W, 100W, 80W, 60W and 40W respectively. The seed laser 1 is a cladding pumped Ytterbium-doped fibre laser operating at around 1070nm, comprising double clad optical fibre (not shown) and two optical fibre Bragg gratings (not shown). The amplifier 3 is a cladding pumped Ytterbium-doped fibre amplifier. The output pulse shapes shown correspond to the amplified first relaxation oscillation from the seed laser 2. The variations in pulse peak power and thus pulse energy were obtained without using the present invention by reducing the output power of both the seed pump 2 and the amplifier pump 4 for each successive measurement. As is clearly visible, as the power level falls, the pulse is delayed, and becomes smeared.

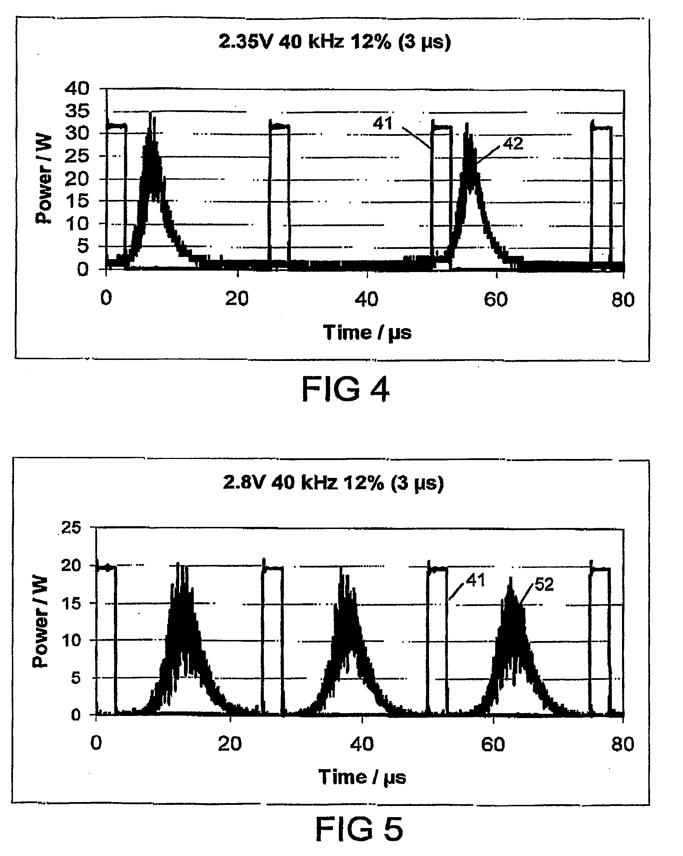

Another problem that is illustrated in Figures 4 and 5 is that reducing the pulse power by such conventional operation not only smears the pulse shape, but also leads to "missing pulses" or noisy pulses. In Figure 4, the control signal 41 for the seed pump 2 and amplifier pump 4 should result in output pulses at the same repetition frequency as the control signal 41. However, as is clearly seen, there are missing pulses. This is because in pulse trains at low powers, there can be insufficient energy stored in the seed laser 1 to produce a relaxation oscillation. When a missing pulse situation occurs, the energy is stored until the next pulse, and can then be sufficient to trigger the laser above threshold. A related issue is one of noisy pulses, where the seed laser is operating just above threshold. This is shown in Figure 5 where the pulses 52 are clearly very much more noisy than those shown with reference to Figures 2 and 3. The output powers at which missing pulses or noisy pulses occurs provide effective lower limits to the dynamic range.

Figure 3 shows a result according to the invention. Pulse shape 31 (see left hand axis 33) was obtained with the amplifier 3 in the second power range 62 in which the amplifier 3 is operated with approximately a 3dB large signal amplification. Pulse shape 32 (see right hand axis 34) was obtained with the amplifier 3 in the first power range 61 in which the amplifier 3 is operated with an attenuation of approximately 1dB. The pulse shapes 31, 32 are virtually identical. Importantly, the apparatus can be operated at lower output powers than in the conventional operating mode without there being missing or very noisy pulses. This is because the seed laser 1 is being driven harder for equivalent output power when operating in the first power range than when being operated in the second power range. Thus the dynamic range has been extended.

Although the pulse shapes in Figure 3 are nearly identical, it should be noted that the pulse shape 31 was delayed in order for the pulses to overlay in the Figure. This is because the pulse turn-on delay varies with drive power, as shown in Figure 2. Thus it is desirable for the controller 5 to include the variable delay 15 if pulse synchronization at different power levels is required. The variable delay 15 can be controlled internally to the laser, or applied externally.

The dynamic range over which the apparatus provides useful output can be further extended by increasing the dynamic large signal amplification range of the amplifier 3. This can be accomplished by use of additional amplification stages to increase the maximum amplification in the second power range 62. Alternatively or additionally, by inserting an absorber or a saturable absorber to increase the effective attenuation in the first power range. The saturable absorber will introduce an additional time delay (not shown) with respect to the pulse entering the saturable absorber corresponding to the time required to bleach the absorption. The rare-earth doped optical fibre 19 will act as a saturable absorber when not pumped. Thus the power amplifier 3 will in practice operate as both an amplifier when pumped, and as an attenuator plus saturable absorber when not pumped.

### EXAMPLE I

In this example of the invention, the apparatus is a two-stage master oscillator power amplifier comprising the seed laser I and the power amplifier 3, in which the optical power partitioning between seed laser 1 and the power amplifier 3 is approximately 1:2. The pumps 2, 4 are implemented as laser diodes. In a 200W laser system, the seed laser 1 would thus contribute approximately 66W to the overall output and the power amplifier 3 would add 133W to achieve the nominal rated power.

In the "standard" mode of operation, both the seed laser 1 and the power amplifier 3 are pumped, and the pump diodes (the pumps 2 and 4) driving both the seed laser 1 and the amplifier 3 are operated in synchronism, the output power being controlled by varying the power supplied by the pumps 2, 4 to the two stages proportionately.

The pump diode current is typically modulated at high speed in order to produce a train of output pulses with the parametric properties required for the printing roll (or other work piece) being processed.

The seed laser 1 comprises a double clad fibre and fibre Bragg gratings to create the laser cavity, and the power amplifier 3 uses the double clad fibre 19. It is preferred that the double clad fibres are side-pumped via a side-pumping fibre (not shown) that couples pump power into the double clad fibre gradually along its length. Optical amplifiers based on double clad fibres pumped by side pumping fibres are described in more detail in United States patent number 6,826,335.

The diameter of the side-pumping fibre may be optimized according to the power rating of the laser. In particular, the diameter of this fibre for the seed laser 1 is preferably smaller than for the power amplifier.

Preferably (but not essentially) the seed laser 1 might contain double clad fibre in which the "active fibre" (Yb-doped core or similar) is approximately 125um in diameter and the "pump fibre" (pure silica fibre for injection of pump diode power into the cavity) is 125um.

To attain the desired power level from the power amplifier stage 3, the double clad fibre 19 contained therein might require larger pump fibre (e.g. 200um) to enable the higher pump diode power to be efficiently coupled into the amplifier 3 without excessive optical loss; the "active fibre" (double clad fibre 19) would usually be of the same design and dimensions as the "active fibre" in the seed source.

The table below shows the application requirements of the laser for a range of anilox processing parameters. The dynamic range is from a pulse energy of 0,08mJ to 40mJ, a range of approximately 500 times (or 27dB). This range cannot be achieved with the conventional laser. A typical range might be 100 times (or 20dB).

**Table 1: Anilox Processing Requirements**

| Anilox Printing Requirement | | Laser Modulation Requirements | | | | | |
|---|---|---|---|---|---|---|---|
| Print Quality / Resolution | Lines per inch (LPI) | Set (CW) power | P.R.F. | Pulse width | Laser Duty cycle | Average power | Pulse energy |
| | | W | kHz | us | % | W | ml |
| Coarse | <500 | 200 | 2.5 | 200 | 50 | 100 | 40 |
| Coarse | <1000 | 200 | 2.5 | 100 | 25 | 50 | 20 |
| Medium | <1000 | 120 | 30 | 8 | 24 | 28.8 | 0.96 |
| Fine | >1000 | 40 | 40 | 3 | 12 | 4.8 | 0.12 |
| Fine | >1000 | 20 | 70 | 3 | 21 | 4.2 | 0.06 |
| Fine | ≥1500 | 40 | 70 | 2 | 14 | <2.0 | 0.08 |

Operating the laser in accordance with the invention permitted the operational parameters as shown in Table 2 to be achieved. The pulse energy can be varied from 40mJ to 0.03mJ, a range of 1,333 (or 31.2dB).

**Table 2: Performance achieved using the invention**

| Anilox Printing Requirement | | Laser Configuration | | Laser Operational Parameters | | | |
|---|---|---|---|---|---|---|---|
| Print Quality / Resolution | Lines per inch (LPI) | Mode | Set (CW) power | P.R.F. | Pulse width | Average power | Pulse energy |
| | | | W | kHz | us | W | mJ |
| Coarse | <500 | Standard | 200 | 2.5 | 100 | 100 | 40 |
| Coarse | <1000 | Standard | 200 | 2.5 | 100 | 50 | 20 |
| Medium | <1000 | Standard | 120 | 30 | 8 | 28.8 | 0.96 |
| Fine | >1000 | Extended Range | 40 | 40 | 3 | 4.8 | 0.12 |
| Fine | >1000 | Extended Range | 20 | 70 | 3 | 4.2 | 0.06 |
| Fine | ≥1500 | Extended Range | 40 | 70 | 2 | <2.0 | 0.08 |
| Ultra Fine | 1800 | Extended Range | 20 | 30 | 3 | 0.9 | 0.03 |

### EXAMPLE II

Figure 6 shows some measurements made with a SP200C-0004 laser made and operated in accordance with the invention. The laser is a 200W continuous wave laser that can be modulated to provide pulses at repetition rates up to and exceeding 100kHz. The measured average output power 63 is shown plotted against the set point average power 64 for both extended range operation, shown by the triangles 65, and standard range operation shown by the circles 66. The output power is stable above approximately 0.9W to 200W when operated in standard mode (the second power range 62), but is unstable below 0.9W (shown by the dashed line 68). The dynamic range can be extended to the dashed line 67 by switching the laser diodes pumping the power amplifier 2 off. This is the extended range operation referred to in Table 2, (the first power range 61). The output is then stable down to 0.05W. The overall dynamic range is thus 0.05W to 200W, a range of 4,000, or 36dB. The laser can operate over the full range of Anilox processes, with pulse energies from 30µJ. Note that the laser can be operated stably in the extended range at power levels in excess of 0.9W, but the laser cannot be operated stably in the standard range below 0.9W without instabilities.

The apparatus of the invention thus increases the dynamic range of a pulsed laser system, especially one that utilizes relaxation oscillations from lasers. It can also be used to increase the repetition frequency from lasers before reaching the lower power levels at which there is pulse drop out and related instabilities.

Preferably the pulsed laser system comprises the seed laser 1 and at least one amplifier 3. Preferably the seed laser 1 and the amplifier 3 are pumped with an aggregate of between 100W and 1000W of pump power. Approximately 10% to 80% of the pump power is provided to the seed laser 1. Preferably, the seed laser is pumped with approximately 20% to 50% of the pump power. More preferably the seed laser 1 is pumped with approximately 25% to 40% of the pump power.

As indicated above, the method of the invention comprises providing the apparatus according to the present invention, and applying the laser radiation to the material 8. The method can include the step of increasing the dynamic range of the laser radiation applied to the material 8 by changing the ratio of pump power provided by the seed pump 2 and the amplifier pump 4. The pump power provided by the seed pump 2 can be substantially more than the pump power provided by the amplifier pump 4. The pump power provided by the amplifier pump 4 can be reduced to zero. The material 8 can be a printing roll. By printing roll, it is meant a roll for printing applications, such as a ceramic printing roll, an anilox printing roll, an ink-transfer roll, an engraved printing rolls, or an engraved sheet that is attached to a roll. This is especially advantageous for ceramic coated printing rolls such as used in the Anilox process. Anilox printing machines are available from Aquaflex, a branch of F.L. Smithe Machine Company, Inc. of Duncansville, Pennsylvania, United States of America.

It is to be appreciated that the embodiments of the invention described above with reference to the accompanying drawings have been given by way of example only and that modifications and additional components may be provided to enhance performance. The present invention extends to the above-mentioned features taken in isolation or in any combination.

## Claims

1. Apparatus for laser processing a material, which apparatus comprises a seed laser (1) pumped by a seed pump (2), an amplifier (3) pumped by an amplifier (4) pump, a controller (5), and a scanner, wherein the controller is arranged to the seed pump, the amplifier pump and the scanner in synchronism such that optical pulses emitted by the seed laser are propagated through the amplifier and directed to the material by the scanner, the apparatus being **characterized in that** the controller is arranged to control the amplifier pump to cause the amplifier to act as an optical attenuator when the optical radiation is in a first power range, and as an optical amplifier when the output power is in a second power range.

2. Apparatus according to claim 1 wherein the scanner comprises a galvanometer and a reflector.

3. Apparatus according to claim 1 or claim 2 wherein the controller includes a switch for turning off electrical drive power to the amplifier pump when in the first power range.

4. Apparatus according to any one of the preceding claims wherein the seed laser comprises a cladding-pumped fibre laser.

5. Apparatus according to claim 4 wherein the cladding-pumped fibre laser comprises a rare-earth dopant.

6. Apparatus according to claim 5 wherein the rare-earth dopant comprises ytterbium.

7. Apparatus according to any one of the preceding claims wherein the amplifier comprises a cladding-pumped fibre amplifier.

8. Apparatus according to claim 7 wherein the cladding-pumped fibre amplifier comprises a rare-earth dopant.

9. Apparatus according to claim 8 wherein the rare-earth dopant comprises ytterbium.

10. Apparatus according to any one of the preceding claims and including at least one additional amplifier stage.

11. Apparatus according to any one of the preceding claims wherein the apparatus includes an absorber

12. Apparatus according to any one of the preceding claims wherein the apparatus includes a saturable absorber.

13. Apparatus according to claim 12 in which the saturable absorber introduces a delay and wherein the apparatus includes a variable delay for compensating the delay.

14. A method for marking a material, the method comprising providing an apparatus according to any of claims 1 - 13, and applying the laser radiation to the material.

15. A method according to claim 14 wherein the material is a printing roll.

## Patentansprüche

1. Vorrichtung zur Laserbearbeitung eines Materials, wobei die Vorrichtung einen Seed-Laser (1), der von einer Seed-Pumpe (2) gepumpt wird, einen Verstärker (3), der von einer Verstärkerpumpe (4) gepumpt wird, einen Controller (5) und einen Scanner umfasst, wobei der Controller dafür ausgelegt ist, die Seed-Pumpe, die Verstärkerpumpe und den Scanner synchron zu steuern, so dass sich von dem Seed-Laser emittierte optische Impulse durch den Verstärker ausbreiten und durch den Scanner auf das Material gelenkt werden, wobei die Vorrichtung **dadurch gekennzeichnet ist, dass** der Controller dafür ausgelegt ist, die Verstärkerpumpe zu steuern, um zu bewirken, dass der Verstärker als ein optisches Dämpfungsglied wirkt, wenn die optische Strahlung in einem ersten Leistungsbereich liegt, und als ein optischer Verstärker, wenn die Ausgangsleisturxg in einem zweiten Leistungsbereich liegt.

2. Vorrichtung nach Anspruch 1, wobei der Scanner ein Galvanometer und einen Reflektor umfasst.

3. Vorrichtung nach Anspruch 1 oder 2, wobei der Controller einen Schalter enthält, um im ersten Leistungsbereich elektrische Antriebsleistung an die Verstärkerpumpe abzuschalten.

4. Vorrichtung nach einem der vorhergehenden Ansprüche, wobei der Seed-Laser einen Claddinggepumpten Faserlaser umfasst.

5. Vorrichtung nach Anspruch 4, wobei der Claddinggepumpte Faserlaser einen Seltenerddotierstoff umfasst.

6. Vorrichtung nach Anspruch 5, wobei der Seltenerddotierstoff Ytterbium umfasst.

7. Vorrichtung nach einem der vorhergehenden Ansprüche, wobei der Verstärker einen Claddinggepumpten Faserverstärker umfasst.

8. Vorrichtung nach Anspruch 7, wobei der Claddinggepumpte Faserverstärker einen Seltenerddotierstoff umfasst.

9. Vorrichtung nach Anspruch 8, wobei der Seltenerddotierstoff Ytterbium umfasst.

10. Vorrichtung nach einem der vorhergehenden Ansprüche und mit mindestens einer zusätzlichen Verstärkerstufe.

11. Vorrichtung nach einem der vorhergehenden Ansprüche, wobei die Vorrichtung einen Absorber enthält.

12. Vorrichtung nach einem der vorhergehenden Ansprüche, wobei die Vorrichtung einen sättigbaren Absorber enthält.

13. Vorrichtung nach Anspruch 12, bei der der sättigbare Absorber eine Verzögerung einführt und wobei die Vorrichtung eine variable Verzögerung zum Kompensieren der Verzögerung enthält.

14. Verfahren zum Markieren eines Materials, wobei das Verfahren das Bereitstellen einer Vorrichtung nach einem der Ansprüche 1-13 und das Anwenden der Laserstrahlung auf das Material umfasst.

15. Verfahren nach Anspruch 14, wobei das Material eine Druckwalze ist.

## Revendications

1. Appareil pour un traitement au laser d'un matériau, lequel appareil comprend un laser d'injection (1) pompé par une source de pompage pour injection (2), un amplificateur (3) pompé par une source de pompage pour amplificateur (4), un contrôleur (5) et un scanner, dans lequel le contrôleur est disposé de façon à contrôler la source de pompage pour injection, la source de pompage pour amplificateur et le scanner de manière synchronisée de sorte que les impulsions optiques émises par le laser d'injection soient propagées à travers l'amplificateur et dirigées jusqu'au matériau par le scanner, l'appareil étant **caractérisé en ce que** le contrôleur est disposé de façon à contrôler la source de pompage pour amplificateur de sorte que l'amplificateur agisse comme un atténuateur optique quand le rayonnement optique est dans une première plage de puissance, et comme un amplificateur optique quand la puissance de sortie est dans une deuxième plage de puissance.

2. Appareil selon la revendication 1, dans lequel le scanner comprend un galvanomètre et un réflecteur.

3. Appareil selon la revendication 1 ou la revendication 2, dans lequel le contrôleur comprend un commutateur pour couper l'alimentation électrique de commande de la source de pompage pour amplificateur lors de la première plage de puissance.

4. Appareil selon l'une quelconque des revendications précédentes, dans lequel le laser d'infection comprend un laser à fibre à pompage par la gaine.

5. Appareil selon la revendication 4, dans lequel le laser à fibre à pompage par la gaine comprend un dopant de type terre rare.

6. Appareil selon la revendication 5, dans lequel le dopant de type terre rare comprend l'ytterbium.

7. Appareil selon l'une quelconque des revendications précédentes, dans lequel l'amplificateur comprend un amplificateur à fibre à pompage par la gaine.

8. Appareil selon la revendication 7, dans lequel l'amplificateur à fibre à pompage par la gaine comprend un dopant de type terre rare.

9. Appareil selon la revendication 8, dans lequel le dopant de type terre rare comprend l'ytterbium.

10. Appareil selon l'une quelconque des revendications précédentes et comprenant au moins un étage amplificateur additionnel.

11. Appareil selon l'une quelconque des revendications précédentes, dans lequel l'appareil comprend un absorbeur.

12. Appareil selon l'une quelconque des revendications précédentes, dans lequel l'appareil comprend un absorbeur saturable.

13. Appareil selon la revendication 12, dans lequel l'absorbeur saturable introduit un délai et dans lequel l'appareil comprend un délai variable pour la compensation du délai.

14. Procédé pour le marquage d'un matériau, le procédé comprenant la fourniture d'un appareil selon l'une quelconque des revendications 1 à 13, et l'application du rayonnement laser au matériau.

15. Procédé selon la revendication 14, dans lequel le matériau est un rouleau d'impression.
